(19) Europäisches Patentamt
European Patent Office
Office européen des brevets

(11) **EP 3 109 263 A1**

(12) **EUROPEAN PATENT APPLICATION**
published in accordance with Art. 153(4) EPC

(43) Date of publication:
**28.12.2016 Bulletin 2016/52**

(21) Application number: **15749146.5**

(22) Date of filing: **16.02.2015**

(51) Int Cl.:
**C08F 8/28** (2006.01)  **B28B 1/30** (2006.01)
**B28B 11/00** (2006.01)  **C04B 35/632** (2006.01)
**C08F 16/38** (2006.01)  **H01B 1/22** (2006.01)

(86) International application number:
**PCT/JP2015/054063**

(87) International publication number:
**WO 2015/122514 (20.08.2015 Gazette 2015/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.02.2014 JP 2014028000**
**17.02.2014 JP 2014028001**

(71) Applicant: **Kuraray Co., Ltd.**
**Kurashiki-shi, Okayama 710-0801 (JP)**

(72) Inventors:
• **KUSUDOU, Takeshi**
**Kurashiki-shi**
**Okayama 713-8550 (JP)**

• **ASANUMA, Yoshiaki**
**Kurashiki-shi**
**Okayama 713-8550 (JP)**
• **TOKUCHI, Kazuki**
**Tokyo 100-8115 (JP)**
• **SHIMAZUMI, Yuhi**
**Kurashiki-shi**
**Okayama 713-8550 (JP)**

(74) Representative: **Müller-Boré & Partner**
**Patentanwälte PartG mbB**
**Friedenheimer Brücke 21**
**80639 München (DE)**

(54) **BINDER FOR FORMATION OF CERAMIC OR FOR USE IN CONDUCTIVE PASTE, AND USE OF SAME**

(57) There is provided a binder for ceramic formation or a conductive paste, comprising polyvinyl acetal having a degree of acetalization of from 50 to 85 mol%, a content of vinyl ester monomer unit of from 0.1 to 20 mol%, and having a viscosity-average degree of polymerization of from 200 to 5000, wherein a peak-top molecular weight (A) as measured by a differential refractive index detector and a peak-top molecular weight (B) as measured by an absorptiometer (measurement wavelength: 280 nm) in gel permeation chromatographic measurement of the polyvinyl acetal heated at 230°C for 3 hours satisfy a formula (1) (A-B)/A < 0.60 and the polyvinyl acetal has an absorbance in the peak-top molecular weight (B) of from $0.50 \times 10^{-3}$ to $1.00 \times 10^{-2}$.

[FIG. 1]

## Description

TECHNICAL FIELD

The present invention relates to a binder for ceramic formation containing polyvinyl acetal. The present invention also relates to a binder for a conductive paste containing polyvinyl alcohol. The present invention further relates to uses thereof.

BACKGROUND ART

Polyvinyl acetal is produced by acetalization reaction of a polyvinyl alcohol (hereinafter, sometimes abbreviated as "PVA") and aldehyde compound in water under acidic conditions. Since polyvinyl acetal is used to produce a tough film and has a unique structure where it has both hydrophilic hydroxyl groups and hydrophobic acetal groups, a variety of polymers have been proposed. Among them, a polyvinyl formal produced from PVA and formaldehyde, a polyvinyl acetoacetal produced from PVA and acetaldehyde, and polyvinyl butyral produced from PVA and butyraldehyde are commercially important.

In particular, polyvinyl butyral has been widely used as a binder for ceramic formation, various binders and films, and the like, and it is especially commercially important.

Binders for ceramic formation are used as a binder for formation during the course of manufacture of a stacked capacitor and a circuit substrate for an IC chip. Among all, they are widely used as a binder used for preparation of a ceramic green sheet. A stacked capacitor and a circuit substrate for an IC chip are manufactured by a method in which an electrode is formed on a ceramic green sheet and stacked for pressure bonding, followed by simultaneous sintering of the electrode and ceramics and the like.

As a method of producing a ceramic green sheet, a method in which a ceramic slurry having polyvinyl acetal, ceramic powder, and an organic solvent as main components is applied on a carrier film, followed by drying and the like are employed.

Examples of performances required for a binder for ceramic formation include production of a ceramic slurry excellent in dispersibility and storage stability, a less amount of carbon residue after sintering, good adhesiveness in pressure bonding, and the like. When the dispersibility or the storage stability of the ceramic slurry is insufficient, a ceramic green sheet produced therefrom may have insufficient density, smoothness, and the like, resulting in poor adhesiveness. When there is a large amount of carbon residue in a shaped ceramic article after sintering, the shaped article may have insufficient electrical properties and the like.

In recent years, with increasing functions and downsizing of electronic devices, there is a demand for increase in capacity and downsizing on stacked ceramic capacitors. To meet such demand, ceramic powder used for a ceramic green sheet has a fine particle size of 0.5 $\mu$m or less and an attempt is made to coat it on a releasable support in a thin film form of, for example, 5 $\mu$m or less.

However, when ceramics powder having a fine particle size is used, the packing density and the surface area increase, causing an increase in the amount of binder resin to be used. Accordingly, the viscosity of the slurry composition for a ceramic green sheet is increased, so that coating sometimes becomes difficult or the ceramic powder itself may be dispersed poorly.

Meanwhile, there is limitation in downsizing of a stacked ceramic capacitor, and in order to increase in capacity or downsize while keeping the capacity of the stacked ceramic capacitor, the green sheet is required to be multilayered in addition to be thinner. For the stacked ceramic capacitor, an electrode layer is formed on a green sheet, and such green sheets formed with an electrode layer and green sheets not formed with it are laminated to obtain a composite lamination.

A procedure of forming such electrode layer includes a method in which an electrode layer is directly formed by a method of printing it on the green sheet and a case in which an electrode layer is formed on a carrier film by printing and the like to transfer the electrode layer by hot press from the carrier film to the green sheet.

However, in the step of pressing the green sheets for lamination, stronger press causes deformation in such green sheet and a conductor layer, and higher precision required for the stacked ceramic component is not achieved. On the other hand, weaker press in a conventional manufacturing method causes a weaker adhesion force between the green sheets or a green sheet and a conductor layer, resulting in upper and lower green sheets not closely adhering. When such poor adhesion occurs, there is a problem of generating a defect after sintering of the ceramic lamination to reduce the reliability of the component.

In addition, in the step of transferring a conductor layer from the carrier film to the green sheet by pressing, stronger press causes deformation in the conductor layer and the higher precision required for the stacked ceramic component is not achieved. In spite of that, weaker press in a conventional manufacturing method causes a weak adhesion strength between the green sheet and the conductor layer, resulting in the conductor layer not closely adhering to the green sheet. When such poor adhesion occurs, there is a problem of, not only failure in conductor layer formation, generating a defect after sintering of the ceramic lamination to reduce the reliability of the component.

Patent Reference No. 1 describes ceramic paste for a ceramic green sheet containing a polyvinyl acetal resin, an organic solvent, and ceramic powder, wherein the polyvinyl acetal resin is acetalized by adding at least dialdehyde at a proportion of from 0.005 to 2 mol% to a vinyl alcohol unit of polyvinyl alcohol having a degree of saponification of 80 mol% or more.

Patent Reference No. 2 describes a slurry composition for a ceramic green sheet containing: a polyvinyl acetal resin having a degree of polymerization of over 1000 and not more than 4500, obtained by acetalization of a polyvinyl alcohol resin having a vinyl ester unit content of less than 1 mol% with monoaldehyde, and having a degree of acetalization of from 60 to 83 mol%; ceramic powder; and an organic solvent.

Patent Reference No. 3 describes a method of producing a stacked ceramic component including a step of preparing a plurality of green sheets containing ceramic powder and an organic binder as essential components, a step of forming a conductor layer on a surface of at least part of the plurality of green sheets, and a step of sintering the plurality of green sheets in lamination, wherein a surface of a lamination obtained by laminating the plurality of green sheets is subjected to surface treatment with ozone followed by lamination of a green sheet on the treated surface.

Patent Reference No. 4 describes a method of producing a lamination using a film surface modified by an atmospheric pressure plasma device, a lamination, and a packaging container using the same.

However, the ceramic paste and the slurry composition according to Patent Reference Nos. 1 and 2 sometimes have insufficient storage stability. In addition, there may be a large amount of carbon residue in shaped ceramic articles obtained from them, and the shaped articles may have insufficient electrical properties and the like. Patent Reference No. 3 refers to a production method to improve adhesiveness by surface treatment on a green sheet surface with ozone and Patent Reference No. 4 refers to a production method to improve adhesiveness by surface treatment on a film using an atmospheric plasma device, whereas both refer only to the improvement in adhesiveness and do not refer to storage stability of a slurry and an amount of carbon residue for quality improvement of the shaped article.

Meanwhile, polyvinyl acetal is also used as a binder for a conductive paste that is used for manufacture of a stacked ceramic capacitor and the like. The stacked ceramic capacitor is a chip type ceramic capacitor in which a large number of dielectrics, such as titanium oxide and barium titanate, and internal electrodes are stacked. Such stacked ceramic capacitor may be manufactured in, for example, the following method. Examples include a method in which a plurality of conductive pastes to be internal electrodes applied on surfaces of ceramic green sheets by screen printing and the like are stacked and heat pressure bonded to obtain a lamination, followed by heating of the lamination for decomposition removal of the binder and then sintering.

Examples of the performances required for a binder for a conductive paste include excellent storage stability, good adhesiveness between the conductive paste and the green sheets, and a less amount of carbon residue in a produced sintered body. When the storage stability of the conductive paste is insufficient, the printability becomes worse during printing of a conductive paste on the surface of a ceramic green sheet and the smoothness of the printing surface becomes poor. When there is a large amount of carbon residue, the sintered body has insufficient electrical properties and the like.

Patent Reference No. 5 describes a binder resin for a conductive paste containing a polyvinyl acetal-(meth)acrylic acid ester composite resin obtained by adding a polymerizable monomer having (meth)acrylic acid esters as a main component to an aqueous medium having a polyvinyl acetal resin dispersed therein for permeation in the polyvinyl acetal resin, followed by polymerization.

However, a conductive paste using the binder for a conductive paste according to Patent Reference No. 5 has insufficient storage stability. In addition, there is a large amount of carbon residue in the sintered body thus produced and the performances are insufficient. Patent Reference No. 3 describes a method production to improve adhesiveness by surface treatment to a green sheet surface with ozone and Patent Reference No. 4 describes a production method to improve adhesiveness by surface treatment to a film using an atmospheric plasma device, whereas both refer only to the improvement in adhesiveness and do not refer to storage stability of a conductive paste and an amount of carbon residue for quality improvement of the shaped article.

PRIOR ART REFERENCES

Patent References

Patent Reference No. 1: JP 2006-282490 A
Patent Reference No. 2: WO 2011/092963 A1
Patent Reference No. 3: JP 2003-95750 A
Patent Reference No. 4: WO 2011/046143 A1
Patent Reference No. 5: JP 2005-15654 A

SUMMARY OF THE INVENTION

PROBLEMS TO BE SOLVED BY THE INVENTION

The present invention has been made to solve the above problems, and it is an object thereof to provide a binder for ceramic formation that is capable of obtaining a ceramic slurry excellent in storage stability and also has a less amount of carbon residue after sintering and improved adhesiveness.

It is an object of the present invention to provide a binder for a conductive paste that is capable of obtaining a conductive paste excellent in storage stability and improving adhesiveness during pressure bonding of a lamination and also capable of obtaining a sintered body having a less amount of carbon residue.

MEANS FOR SOLVING THE PROBLEMS

The above problems can be solved by providing a binder for ceramic formation or a conductive paste, comprising

polyvinyl acetal having a degree of acetalization of from 50 to 85 mol%, a content of vinyl ester monomer unit of from 0.1 to 20 mol%, and having a viscosity-average degree of polymerization of from 200 to 5000, wherein

a peak-top molecular weight (A) as measured by a differential refractive index detector and a peak-top molecular weight (B) as measured by an absorptiometer (measurement wavelength: 280 nm) in gel permeation chromatographic measurement of the polyvinyl acetal heated at 230°C for 3 hours satisfy a formula (1) below

$$(A-B)/A < 0.60 \quad (1)$$

and the polyvinyl acetal has an absorbance in the peak-top molecular weight (B) of from $0.50 \times 10^{-3}$ to $1.00 \times 10^{-2}$.

Here, in the GPC measurement,

Mobile phase: hexafluoroisopropanol with 20 mmol/L sodium trifluoroacetate (hereinafter, hexafluoroisopropanol is sometimes abbreviated as HFIP)

Sample concentration: 1.00 mg/mL

Sample injection volume: 100 $\mu$L

Column: "GPC HFIP-806M" manufactured by Showa Denko K. K.

Column temperature: 40 °C

Flow rate: 1 mL/min.

Cell Length of Absorptiometer: 10 mm.

In this case, it is preferred that the polyvinyl acetal has a ratio Mw/Mn of a weight-average molecular weight Mw to a number-average molecular weight Mn as measured by the differential refractive index detector in the gel permeation chromatographic measurement of from 2.8 to 12.0.

It is preferred that the polyvinyl acetal is polyvinyl butyral. It is also preferred that the polyvinyl acetal has, in a side chain, at least one functional group selected from the group consisting of an amide group, an amino group, ester group, a carbonyl group, and a vinyl group. It is also preferred that the functional group is an amide group or an amino group.

It is preferred that the above binder is the binder for ceramic formation.

A preferred embodiment of the present invention is a ceramic slurry comprising: the binder for ceramic formation; ceramic powder; an organic solvent; and a plasticizer. A ceramic green sheet obtained by using the ceramic slurry is also a preferred embodiment of the present invention.

The above problems can also be solved by providing a method of producing a ceramic green sheet, comprising applying atmospheric pressure plasma treatment on at least one surface of the ceramic green sheet.

The above problems can also be solved by providing a ceramic green sheet obtained by the production method.

It is preferred that the binder is the binder for a conductive paste.

A preferred embodiment of the present invention is a conductive paste comprising: the binder for a conductive paste; metal powder; and an organic solvent. A coated sheet obtained by coating the conductive paste on a surface of a ceramic green sheet is also a preferred embodiment of the present invention.

The above problems can also be solved by providing a method of producing a coated sheet, comprising applying atmospheric pressure plasma treatment on at least one surface of the coated sheet.

The above problems can also be solved by providing a coated sheet obtained by the production method.

EFFECTS OF THE INVENTION

A ceramic slurry obtained by using a binder for ceramic formation of the present invention is excellent in storage stability. In addition, a binder of the present invention has a less amount of carbon residue after sintering.

A conductive paste obtained by using a binder for a conductive paste of the present invention is excellent in storage stability. In addition, adhesiveness during pressure bonding of a lamination is improved and further the use of the conductive paste enables production of a sintered body having a less amount of carbon residue.

BRIEF DESCRIPTION OF THE DRAWINGS

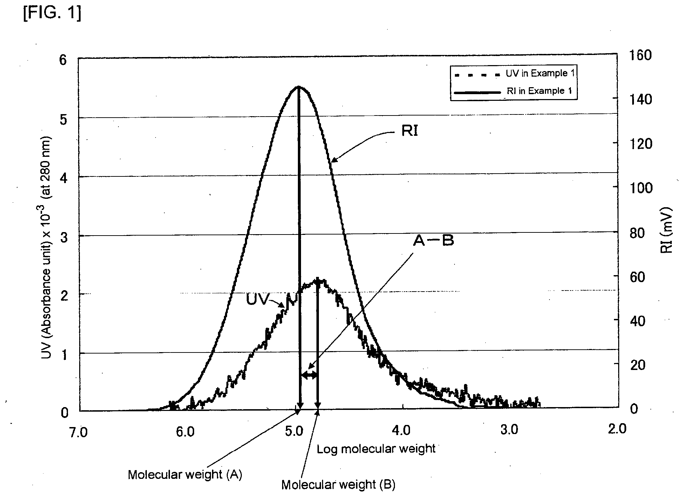

Fig. 1 is a graph showing relationship between a molecular weight and a value as measured by a differential refractive index detector (RI), and relationship between a molecular weight and an absorbance as measured by an absorptiometer (UV) (measurement wavelength: 280 nm) for polyvinyl acetal in Example 1.

MODES FOR CARRYING OUT THE INVENTION

Polyvinyl acetal contained in a binder for ceramic formation or a conductive paste of the present invention is polyvinyl acetal having a degree of acetalization of from 50 to 85 mol%, a content of vinyl ester monomer unit of from 0.1 to 20 mol%, and having a viscosity-average degree of polymerization of from 200 to 5000, wherein

a peak-top molecular weight (A) as measured by a differential refractive index detector and a peak-top molecular weight (B) as measured by an absorptiometer (measurement wavelength: 280 nm) in GPC measurement of the polyvinyl acetal heated at 230°C for 3 hours satisfy a formula (1) below

$$(A-B)/A < 0.60 \quad (1)$$

and the polyvinyl acetal has an absorbance in the peak-top molecular weight (B) of from $0.50 \times 10^{-3}$ to $1.00 \times 10^{-2}$.

Here, in the GPC measurement,
Mobile phase: HFIP with 20 mmol/L sodium trifluoroacetate
Sample concentration: 1.00 mg/mL
Sample injection volume: 100 $\mu$L
Column: "GPC HFIP-806M" manufactured by Showa Denko K. K.
Column temperature: 40 °C
Flow rate: 1 mL/min.
Cell Length of Absorptiometer: 10 mm.

In the present invention, GPC measurement is conducted using a GPC instrument equipped with a differential refractive index detector and an absorptiometer, which permits concurrent measurement using these detectors. An absorptiometer is used that is capable of measuring the absorbance at a wavelength of 280 nm. A cell in a detection unit in the absorptiometer has a cell length (optical path length) of 10 mm. The absorptiometer may be a type which measures absorption of ultraviolet light with a particular wavelength or a type which spectrometrically measures ultraviolet light absorption having a wavelength within a particular range. Polyvinyl acetal to be measured is separated into individual molecular weight components by a GPC column. Signal intensity as measured by a differential refractive index detector is generally proportional to a concentration of polyvinyl acetal (mg/mL). Meanwhile, polyvinyl acetal detected by an absorptiometer is only one that can absorb a given wavelength. For each molecular weight component in the polyvinyl acetal, a concentration and an absorbance at a given wavelength can be measured by the GPC measurement described above.

A solvent and a mobile phase used for dissolving polyvinyl acetal measured in the above GPC measurement is HFIP with 20 mmol/L sodium trifluoroacetate. HFIP can dissolve polyvinyl acetal and polymethyl methacrylate (hereinafter, may be abbreviated as PMMA). Furthermore, addition of sodium trifluoroacetate allows inhibition of adsorption of polyvinyl acetal to a column filler. In the GPC measurement, a flow rate is 1 mL/min and a column temperature is 40°C.

In the GPC measurement, monodisperse PMMA (hereinafter, referred to as standard PMMA) is used as a standard. Measurement is conducted for several types of standard PMMA with a different molecular weight, and from GPC elution volumes and molecular weights of the standard PMMA, a calibration curve is formed. Herein, for measurement by a differential refractive index detector, a calibration curve formed using the detector is used, while for measurement by an absorptiometer, a calibration curve formed using the detector is used. Using these calibration curves, a GPC elution volume is converted to a molecular weight, and a peak-top molecular weight (A) and a peak-top molecular weight (B) are determined.

Before the above GPC measurement, polyvinyl acetal is heated at 230°C for 3 hours. Herein, polyvinyl acetal is heated by the following method. In order to clearly reflect a difference in sample hue after heating on a difference in an absorbance, polyvinyl acetal powder is hot pressed at a pressure of 2 MPa and a temperature of 230°C for 3 hours to obtain heated polyvinyl acetal (film). A thickness of the film at this point is from 600 to 800 $\mu$m, preferably 760 $\mu$m in general.

After heating, the polyvinyl acetal is dissolved in the above solvent to prepare a measurement sample. A concentration of polyvinyl acetal in the measurement sample is 1.00 mg/mL and an injection volume is 100 $\mu$L. Here, if a viscosity-average degree of polymerization of the polyvinyl acetal is over 2400, an excluded volume is so increased that at a concentration of the polyvinyl acetal of 1.00 mg/mL, measurement may not be reproducibly conducted. In such a case, an appropriately diluted sample (injection volume: 100 $\mu$L) is used. An absorbance is proportional to a concentration of polyvinyl acetal. Therefore, using a concentration of a diluted sample and the observed absorbance, an absorbance is obtained at polyvinyl acetal concentration of 1.00 mg/mL.

Fig. 1 is a graph showing relationship between a molecular weight and a value as measured by a differential refractive index detector, and relationship between a molecular weight and an absorbance as measured by an absorptiometer (measurement wavelength: 280 nm), which were obtained by GPC measurement of polyvinyl acetal in Examples of the present invention described later. Using Fig. 1, there will be further described GPC measurement in the present invention. In Fig. 1, the chromatogram indicated by "RI" is a plot of a value as measured by a differential refractive index detector to a molecular weight of polyvinyl acetal converted from an elution volume (horizontal axis). Herein, a molecular weight at such a peak position in the chromatogram is a peak-top molecular weight (A). When a plurality of peaks is present in the chromatogram, a molecular weight at the highest peak is regarded as a peak-top molecular weight (A).

In Fig. 1, the chromatogram indicated by "UV" is a plot of an absorbance as measured by an absorptiometer (measurement wavelength: 280 nm) to a molecular weight of polyvinyl acetal converted from an elution volume (horizontal axis). Herein, a molecular weight at a peak position in the chromatogram is a peak-top molecular weight (B). When a plurality of peaks is present in the chromatogram, a molecular weight at the highest peak is regarded as a peak-top molecular weight (B).

In the polyvinyl acetal, the following formula (1) is satisfied by a peak-top molecular weight (A) as measured by a differential refractive index detector and a peak-top molecular weight (B) as measured by an absorptiometer (measurement wavelength: 280 nm), obtained by GPC measurement as described above.

$$(A-B)/A < 0.60 \quad (1)$$

A peak-top molecular weight (A) is a measure of a molecular weight of polyvinyl acetal. Meanwhile, a peak-top molecular weight (B) is derived from a component having absorption at 280 nm which is present in polyvinyl acetal. A peak-top molecular weight (A) is generally larger than a peak-top molecular weight (B), so that (A-B)/A is positive. The larger a peak-top molecular weight (B) is, the smaller (A-B)/A is, while the smaller a peak-top molecular weight (B) is, the larger (A-B)/A is. It indicates that a larger (A-B)/A means more components absorbing ultraviolet rays with a wavelength of 280 nm in low molecular weight components in polyvinyl acetal.

If (A-B)/A is 0.60 or more, more components absorbing ultraviolet rays with a wavelength of 280 nm are present in low molecular weight components as described above.

If (A-B)/A is 0.60 or more, the storage stability of a ceramic slurry containing the polyvinyl acetal is reduced. (A-B)/A is preferably less than 0.55 and more preferably less than 0.50.

If (A-B)/A is 0.60 or more, the storage stability of a conductive paste containing the polyvinyl acetal is reduced. (A-B)/A is preferably less than 0.55 and more preferably less than 0.50.

The polyvinyl acetal has to have an absorbance in the peak-top molecular weight (B) in GPC measurement by the method described above (measurement wavelength: 280 nm) of from $0.50 \times 10^{-3}$ to $1.00 \times 10^{-2}$.

If the absorbance is less than $0.50 \times 10^{-3}$, the dispersibility of a ceramic slurry containing the polyvinyl acetal is reduced. In addition, the storage stability of the ceramic slurry is also reduced. In contrast, if the absorbance is over $1.00 \times 10^{-2}$, an amount of carbon residue in a shaped ceramic article produced therefrom increases. The absorbance is preferably from $1.00 \times 10^{-3}$ to $8.00 \times 10^{-3}$ and more preferably from $1.50 \times 10^{-3}$ to $6.50 \times 10^{-3}$.

If the absorbance is less than $0.50 \times 10^{-3}$, the storage stability of a conductive paste obtained therefrom is reduced. In addition, the dispersibility of metal powder in the conductive paste is also reduced. In contrast, if the absorbance is over $1.00 \times 10^{-2}$, an amount of carbon residue after heating of the conductive paste increases and electrical properties and the like of a sintered body obtained therefrom are insufficient. The absorbance is preferably from $1.00 \times 10^{-3}$ to $8.00 \times 10^{-3}$ and more preferably from $1.50 \times 10^{-3}$ to $6.50 \times 10^{-3}$.

It is preferred that the polyvinyl acetal has a ratio Mw/Mn of a weight-average molecular weight Mw to a number-average molecular weight Mn as measured by the differential refractive index detector in the GPC measurement of from 2.8 to 12.0. Mw and Mn are determined from the chromatogram obtained by plotting values as measured by a differential refractive index detector to the molecular weight of polyvinyl acetal described above. Mw and Mn in the present invention are values converted to PMMA.

Generally, Mn is an average molecular weight strongly affected by low molecular weight components, and Mw is an average molecular weight strongly affected by high molecular weight components. Mw/Mn is generally used as an index for molecular weight distribution of a polymer. A smaller Mw/Mn indicates a polymer having a smaller proportion of low molecular weight components, and a larger Mw/Mn indicates a polymer having a large proportion of low molecular weight components.

Accordingly, in the present invention, Mw/Mn less than 2.8 indicates a smaller proportion of low molecular weight components in polyvinyl acetal.

If Mw/Mn is less than 2.8, the dispersibility of a ceramic slurry containing the polyvinyl acetal may be reduced. The storage stability of the ceramic slurry may also be reduced. Mw/Mn is more preferably 2.9 or more and even more preferably 3.1 or more. In contrast, Mw/Mn over 12.0 indicates a large proportion of low molecular weight components in polyvinyl acetal. If Mw/Mn is over 12.0, an amount of carbon residue in a shaped ceramic article produced therefrom may increase. Mw/Mn is more preferably 11.0 or less and even more preferably 8.0 or less.

When the dispersibility and the storage stability of the ceramic slurry is reduced, the green sheet surface is roughened and it is considered to adversely affect the adhesiveness of the green sheet and quality of a shaped article produced after that and quality after sintering.

If Mw/Mn is less than 2.8, the dispersibility of metal powder in the conductive paste may be reduced. The storage stability of the conductive paste may also be reduced. Mw/Mn is more preferably 2.9 or more and even more preferably 3.1 or more. In contrast, Mw/Mn over 12.0 indicates a larger proportion of low molecular weight components in polyvinyl acetal. If Mw/Mn is over 12.0, an amount of carbon residue after heating of the conductive paste increases and electrical properties and the like of a sintered body obtained therefrom may be insufficient. Mw/Mn is more preferably 11.0 or less and even more preferably 8.0 or less.

When the storage stability of the conductive paste is reduced, a desired printing thickness may not be obtained, the surface after printing may be rough to adversely affect the electrical properties and the like of the sintered body.

A degree of acetalization of polyvinyl acetal contained in a binder of the present invention is from 55 to 80 mol%, preferably from 55 to 82 mol%, more preferably from 60 to 78 mol%, and even more preferably from 65 to 75 mol%.

If a degree of acetalization is less than 50 mol%, the storage stability of a ceramic slurry containing the polyvinyl acetal is reduced. Meanwhile, if the degree of acetalization is more than 85 mol%, efficiency of an acetalization reaction is significantly reduced. In addition, the hydroxyl group (vinyl alcohol monomer unit) content in polyvinyl acetal is reduced, and the strength of a ceramic green sheet produced by using a binder for ceramic formation of the present invention is reduced. Further, an amount of carbon residue in a shaped ceramic article produced therefrom increases.

If the degree of acetalization is less than 50 mol%, the storage stability of a conductive paste containing the polyvinyl acetal is reduced. In contrast, if the degree of acetalization is over 85 mol%, the efficiency of acetalization reaction is significantly reduced and the productivity is significantly worsened, and thus it lacks commerciality. An amount of carbon residue after heating of the conductive paste increases, and electrical properties and the like of a sintered body obtained therefrom are insufficient.

A degree of acetalization is a proportion of acetalized vinyl alcohol monomer units to the total monomer units constituting polyvinyl acetal. Of vinyl alcohol monomer units in starting PVA, those which have not been acetalized remain as vinyl alcohol monomer units in polyvinyl acetal produced.

A viscosity-average degree of polymerization of polyvinyl acetal contained in a binder of the present invention is expressed as a viscosity-average degree of polymerization of starting PVA measured in accordance with JIS-K6726. Specifically, PVA is resaponified to a degree of saponification of 99.5 mol% or more and purified, followed by measuring its limiting viscosity $[\eta]$ (l/g) in water at 30°C, which can be used for determining a viscosity-average degree of polymerization from the equation below. A viscosity-average degree of polymerization of PVA is substantially equal to a viscosity-average degree of polymerization of polyvinyl acetal as its acetalization product.

$$P = ([\eta] \times 10000/8.29)^{(1/0.62)}$$

The polyvinyl acetal has a viscosity-average degree of polymerization of from 200 to 5000.

If the viscosity-average degree of polymerization is less than 200, the strength of a ceramic green sheet produced by using the binder for ceramic formation of the present invention may be reduced. The viscosity-average degree of polymerization is preferably 250 or more, more preferably 300 or more, and even more preferably 400 or more. In contrast, if the viscosity-average degree of polymerization is over 5000, the viscosity of a ceramic slurry prepared during production of a ceramic green sheet becomes too high and the productivity may be reduced. The viscosity-average degree of polymerization is preferably 4500 or less, more preferably 4000 or less, and even more preferably 3500 or less.

If the viscosity-average degree of polymerization is less than 200, when a coating film is formed by coating a conductive paste of the present invention, the strength of the coating film may be reduced. The viscosity-average degree of polymerization is preferably 250 or more, more preferably 300 or more, and even more preferably 400 or more. In contrast, if the viscosity-average degree of polymerization is over 5000, the viscosity of the conductive paste becomes too high and the printability may be reduced. The viscosity-average degree of polymerization is preferably 4500 or less, more preferably 4000 or less, even more preferably 3500 or less, and particularly preferably 2500 or less.

A content of vinyl ester monomer unit in the polyvinyl acetal is from 0.1 to 20 mol%, preferably from 0.3 to 18 mol%, more preferably from 0.5 to 15 mol%, and even more preferably from 0.7 to 13 mol%. If a content of vinyl ester monomer unit is less than 0.1 mol%, polyvinyl acetal cannot be stably produced.

If the content of vinyl ester monomer unit is over 20 mol%, the storage stability of a ceramic slurry containing the polyvinyl acetal is reduced and also an amount of carbon residue in a shaped ceramic article produced therefrom increases.

If the content of vinyl ester monomer unit is over 20 mol%, the storage stability of a conductive paste containing the polyvinyl acetal is reduced.

A content of monomer units other than acetalized monomer units, vinyl ester monomer units, and vinyl alcohol monomer units in the polyvinyl acetal is preferably 20 mol% or less and more preferably 10 mol% or less.

Polyvinyl acetal contained in a binder of the present invention is generally produced by acetalizing PVA.

A degree of saponification of starting PVA is preferably from 80 to 99.9 mol%, more preferably from 82 to 99.7 mol%, even more preferably from 85 to 99.5 mol%, and most preferably from 87 to 99.3 mol%.

If the degree of saponification is less than 80 mol%, the dispersibility of a ceramic slurry containing the polyvinyl acetal may be reduced.

If the degree of saponification is less than 80 mol%, the dispersibility of metal powder in the conductive paste may be reduced. In addition, the storage stability of a conductive paste containing the polyvinyl acetal is reduced.

Meanwhile, if the degree of saponification is more than 99.9 mol%, PVA may not be stably produced. A degree of saponification of PVA is measured in accordance with JIS-K6726.

The polyvinyl acetal preferably has at least one functional group selected from the group consisting of an amide group, an amino group, an ester group, a carbonyl group, and a vinyl group in a side chain. The functional group is more preferably an amide group or an amino group. Its content based on the number of monomer units in PVA before acetalization is preferably 20 mol% or less, more preferably 10 mol% or less, and even more preferably 5 mol% or less. If the functional group content is less than 20 mol%, production of polyvinyl acetal sometimes becomes difficult.

The process of introducing a functional group into a side chain is not particularly limited. In, for example, a production method described later, examples of the process include a method in which a comonomer having the functional group and vinyl ester, such as vinyl acetate, are copolymerized, a method in which acetalization is performed using aldehyde having the functional group, a method in which hydroxyl groups in vinyl alcohol units that have not been acetalized are reacted with carboxylic acid, and the like. Examples of the polymerization method include known methods, such as bulk polymerization, solution polymerization, suspension polymerization, and emulsion polymerization. Among these methods, bulk polymerization in a nonsolvent system or solution polymerization using a solvent, such as alcohol, are employed generally. From the perspective of improving the effects of the present invention, solution polymerization is preferred in which polymerization is conducted together with lower alcohol.

Examples of vinyl ester which is used for producing starting PVA include vinyl formate, vinyl acetate, vinyl propionate, vinyl valerate, vinyl caprate, vinyl laurate, vinyl stearate, vinyl benzoate, vinyl pivalate, and vinyl versatate, particularly preferably vinyl acetate.

Examples of the comonomer that is used in the copolymerization with vinyl acetate and may be copolymerized to introduce the functional group include a carbonyl group-containing monomer, an amino group-containing monomer, a vinyl group-containing monomer, an N-vinylamide based monomer, and a (meth)acrylamide based monomer, and the like.

Examples of the carbonyl group-containing monomer include diacetone acrylamide and the like.

Examples of the amino group-containing monomer include allylamine, dimethylaminopropyl methacrylamide, N-isobutoxymethyl methacrylamide, dimethylaminoacrylamide, dimethylaminoethyl acrylate, acryloylmorpholine, and the like. Examples of the vinyl group-containing monomer include trimethylolpropane diallyl ether, pentaerythritol triallyl ether, and the like.

Examples of the N-vinylamide based monomer include N-vinyl-2-pyrrolidones, N-vinyl -2-caprolactams, N-vinylformamide, N-methyl-N-vinylformamide, N-vinylacetoamide, N-methyl-N-vinylacetoamide, and the like.

Examples of N-vinyl-2-pyrrolidones include N-vinyl-2-pyrrolidone, N-vinyl-3-propyl-2-pyrrolidone, N-vinyl-5,5-dimethyl-2-pyrrolidone, N-vinyl-3,5-dimethyl-2-pyrrolidone, and the like.

Examples of the (meth)acrylamide based monomer include: acrylamide; acrylamide derivatives such as N-methylacrylamide and N-ethylacrylamide; methacrylamide; methacrylamide derivatives such as N-methylmethacrylamide and N-ethylmethacrylamide; and the like.

Examples of the acrylamide derivatives include N-methylolacrylamide, N-methoxymethylacrylamide, N-n-butoxymethylacrylamide, n-isobutoxymethylacrylamide, tertiary butylacrylamidesulfonic acid, tertiary butylacrylamide, dimethylaminopropyl methacrylamide, N-methoxymethyl methacrylamide, N-ethoxymethyl methacrylamide, N-n-butoxymethyl methacrylamide, N-isobutoxymethyl methacrylamide, N-ethoxymethyl acrylamide, and the like.

Among these monomers, from the perspective of producing a homogeneous ceramics green sheet and the perspective of producing a homogeneous coated sheet, N-vinylacetoamide, N-vinyl-2-caprolactam, N-methoxymethyl methacrylamide are even more preferred.

Starting PVA can also be produced by polymerizing vinyl ester in the presence of a thiol compound such as 2-mercaptoethanol, n-dodecyl mercaptan, mercaptoacetic acid, and 3-mercaptopropionic acid to give polyvinyl ester and then saponifying the polyvinyl ester. This process provides PVA having terminal functional groups derived from the thiol compound.

Vinyl ester can be polymerized by a known method such as bulk polymerization, solution polymerization, suspension polymerization, and emulsion polymerization. Among these, bulk polymerization in a nonsolvent system and solution polymerization using a solvent such as alcohol are generally employed. In the light of improving the effects of the present invention, solution polymerization where polymerization is conducted in lower alcohol is preferable. The lower alcohol is preferably, but not limited to, alcohol having 3 or less carbon atoms such as methanol, ethanol, propanol and isopropanol, and generally, methanol is used. When the polymerization reaction is conducted by bulk polymerization or solution polymerization, the reaction can be any of batch and continuous types. Examples of an initiator used in the polymerization reaction include known initiators including an azo initiator such as 2,2'-azobisisobutyronitrile, 2,2'-azobis(2,4-dimethylvaleronitrile), and 2,2'-azobis(4-methoxy-2,4-dimethylvaleronitrile); and organic peroxide initiator such as benzoyl peroxide, n-propyl peroxycarbonate, and peroxydicarbonate as long as the effects of the present invention are not impaired. In particular, organic peroxide initiator which has a half-life period of from 10 to 110 min. at 60°C is preferably used, particularly preferably peroxydicarbonate. A polymerization temperature during the polymerization reaction is suitably, but not limited to, from 5 to 200°C.

In radical polymerization of vinyl ester, as necessary, copolymerization can be conducted with a copolymerizable monomer as long as the effects of the present invention are not impaired. Examples of such a monomer include $\alpha$-olefins such as ethylene, propylene, 1-butene, isobutene, and 1-hexene; carboxylic acids or derivatives thereof such as fumaric acid, maleic acid, itaconic acid, maleic anhydride, and itaconic anhydride; acrylic acids or salts thereof; acrylic acid esters such as methyl acrylate, ethyl acrylate, n-propyl acrylate, and isopropyl acrylate; methacrylic acids or salts thereof; methacrylic acid esters such as methyl methacrylate, ethyl methacrylate, n-propyl methacrylate, and isopropyl methacrylate; vinyl ethers such as methyl vinyl ether, ethyl vinyl ether, n-propyl vinyl ether, isopropyl vinyl ether, and n-butyl vinyl ether; hydroxyl group-containing vinyl ethers such as ethylene glycol vinyl ether, 1,3-propanediol vinyl ether, and 1,4-butanediol vinyl ether; allyl ethers such as allyl acetate, propyl allyl ether, butyl allyl ether, and hexyl allyl ether; monomers having an oxyalkylene group; hydroxyl group-containing $\alpha$-olefins such as isopropenyl acetate, 3-buten-1-ol, 4-penten-1-ol, 5-hexen-1-ol, 7-octen-1-ol, 9-decen-1-ol, and 3-methyl-3-buten-1-ol; monomers having a sulfonic group such as ethylenesulfonic acid, allylsulfonic acid, methallylsulfonic acid, and 2-acrylamide-2-methylpropanesulfonic acid; cationic group-containing monomers such as vinyloxyethyltrimethylammonium chloride, vinyloxybutyltrimethylammonium chloride, vinyloxyethyldimethylamine, vinyloxymethyldiethylamine, N-acrylamide methyltrimethylammonium chloride, N-acrylamide ethyltrimethylammonium chloride, N-acrylamide dimethylamine, allyltrimethylammonium chloride, methallyltrimethylammonium chloride, dimethylallylamine, and allylethylamine; and monomers having a silyl group

**Claims**

1.  A binder for ceramic formation or a conductive paste, comprising polyvinyl acetal having a degree of acetalization of from 50 to 85 mol%, a content of vinyl ester monomer unit of from 0.1 to 20 mol%, and having a viscosity-average degree of polymerization of from 200 to 5000, wherein
    a peak-top molecular weight (A) as measured by a differential refractive index detector and a peak-top molecular weight (B) as measured by an absorptiometer (measurement wavelength: 280 nm) in gel permeation chromatographic measurement of the polyvinyl acetal heated at 230°C for 3 hours satisfy a formula (1) below

$$(A-B)/A < 0.60 \quad (1)$$

    and the polyvinyl acetal has an absorbance in the peak-top molecular weight (B) of from $0.50 \times 10^{-3}$ to $1.00 \times 10^{-2}$.

2.  The binder according to Claim 1, wherein the polyvinyl acetal has a ratio Mw/Mn of a weight-average molecular weight Mw to a number-average molecular weight Mn as measured by the differential refractive index detector in the gel permeation chromatographic measurement of from 2.8 to 12.0.

3.  The binder according to Claim 1 or 2, wherein the polyvinyl acetal is polyvinyl butyral.

4.  The binder according to any one of Claims 1 to 3, wherein the polyvinyl acetal has, in a side chain, at least one functional group selected from the group consisting of an amide group, an amino group, ester group, a carbonyl group, and a vinyl group.

5.  The binder according to Claim 4, wherein the functional group is an amide group or an amino group.

6.  The binder according to any one of Claims 1 to 5, which is the binder for ceramic formation.

7.  A ceramic slurry comprising: the binder for ceramic formation according to Claim 6; ceramic powder; an organic solvent; and a plasticizer.

8.  A ceramic green sheet obtained by using the ceramic slurry according to Claim 7.

9.  A method of producing a ceramic green sheet, comprising applying atmospheric pressure plasma treatment on at least one surface of the ceramic green sheet according to Claim 8.

10. A ceramic green sheet obtained by the production method according to Claim 9.

11. The binder according to any one of Claims 1 to 5, which is the binder for a conductive paste.

12. A conductive paste comprising: the binder for a conductive paste according to Claim 11; metal powder; and an organic solvent.

13. A coated sheet obtained by coating the conductive paste according to Claim 12 on a surface of a ceramic green sheet.

14. A method of producing a coated sheet, comprising applying atmospheric pressure plasma treatment on at least one surface of the coated sheet according to Claim 13.

15. A coated sheet obtained by the production method according to Claim 14.

[FIG. 1]

**INTERNATIONAL SEARCH REPORT**

International application No.

PCT/JP2015/054063

| A. CLASSIFICATION OF SUBJECT MATTER |
|---|
| *C08F8/28*(2006.01)i, *B28B1/30*(2006.01)i, *B28B11/00*(2006.01)i, *C04B35/632* (2006.01)i, *C08F16/38*(2006.01)i, *H01B1/22*(2006.01)i |

According to International Patent Classification (IPC) or to both national classification and IPC

| B. FIELDS SEARCHED |
|---|
| Minimum documentation searched (classification system followed by classification symbols)<br>C08F8/00-8/50, B28B1/30, B28B11/00, C04B35/632, C08F16/38, C08F216/38, H01B1/22 |

Documentation searched other than minimum documentation to the extent that such documents are included in the fields searched
Jitsuyo Shinan Koho          1922–1996     Jitsuyo Shinan Toroku Koho     1996–2015
Kokai Jitsuyo Shinan Koho     1971–2015     Toroku Jitsuyo Shinan Koho     1994–2015

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| P,A | WO 2015/019441 A1 (Kuraray Co., Ltd.),<br>12 February 2015 (12.02.2015),<br>claims; examples<br>(Family: none) | 1–15 |
| A | JP 2011-508802 A (Sekisui Specialty Chemicals America, LLC),<br>17 March 2011 (17.03.2011),<br>claims; paragraphs [0010] to [0013], [0025];<br>examples<br>& US 2009/0163658 A1    & WO 2009/142616 A1<br>& EP 2222461 A1          & CN 101903171 A | 1–15 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    14 April 2015 (14.04.15) | Date of mailing of the international search report<br>    21 April 2015 (21.04.15) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**INTERNATIONAL SEARCH REPORT**

| International application No. |
| --- |
| PCT/JP2015/054063 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2011-241234 A (The Nippon Synthetic Chemical Industry Co., Ltd.), 01 December 2011 (01.12.2011), claims; paragraphs [0006] to [0009], [0031], [0051] to [0060]; examples & US 2012/0041118 A1 & WO 2010/126041 A1 & EP 2426172 A1 | 1-15 |
| A | JP 2005-29764 A (Kuraray Co., Ltd.), 03 February 2005 (03.02.2005), claims; paragraphs [0013] to [0018], [0034] to [0035]; examples (Family: none) | 1-15 |
| A | JP 2008-214435 A (Denki Kagaku Kogyo Kabushiki Kaisha), 18 September 2008 (18.09.2008), claims; paragraphs [0017] to [0019], [0036]; examples (Family: none) | 1-15 |
| A | WO 2011/108152 A1 (Denki Kagaku Kogyo Kabushiki Kaisha), 09 September 2011 (09.09.2011), claims; paragraphs [0006] to [0008], [0019] to [0028]; examples & JP 2011-178964 A & US 2012/0329949 A1 & EP 2543692 A1 & CN 102782016 A | 1-15 |
| A | WO 2013/047717 A1 (Kuraray Co., Ltd.), 04 April 2013 (04.04.2013), claims; examples & US 2014/0256863 A1 & EP 2762463 A1 & CN 103842313 A & KR 10-2014-0079793 A | 1-15 |
| A | JP 2012-144660 A (Sekisui Chemical Co., Ltd.), 02 August 2012 (02.08.2012), claims; paragraphs [0001] to [0007], [0025]; examples (Family: none) | 1-15 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006282490 A
- WO 2011092963 A1
- JP 2003095750 A
- WO 2011046143 A1
- JP 2005015654 A